# EUROPEAN PATENT SPECIFICATION

(11) **EP 3 835 379 B1**
(45) Date of publication and mention of the grant of the patent: **19.03.2025**
(21) Application number: 19940913.7
(22) Date of filing: 02.08.2019
(51) Int. Cl.: C09D 167/00, C09D 5/03, C08G 63/12, C08G 63/78, C08G 63/199, C08G 63/85, C08G 63/183, C08G 63/20

(54) **POLYESTER RESIN COMPOSITION, POWDER COATING AND WORKPIECE**
POLYESTERHARZZUSAMMENSETZUNG, PULVERBESCHICHTUNG UND WERKSTÜCK
COMPOSITION EN RÉSINE DE POLYESTER, REVÊTEMENT EN POUDRE ET PIÈCE À TRAVAIL

(43) Date of publication of application: 16.06.2021
(73) Proprietor: Kinte Materials Science and Technology Co., Ltd., Dongguan, Guangdong 523000 (CN)
(72) Inventor: MA, Zhiping, Guangzhou, Guangdong 510860 (CN); LI, Yong, Guangzhou, Guangdong 510860 (CN); XIE, Jing, Guangzhou, Guangdong 510860 (CN); LIU, Liang, Guangzhou, Guangdong 510860 (CN); GU, Yuxin, Guangzhou, Guangdong 510860 (CN); ZHANG, Jie, Guangzhou, Guangdong 510860 (CN)
(74) Representative: Serravalle, Marco
(86) International application number: PCT/CN2019/098955
(87) International publication number: WO 2021/022389

(56) References cited:
- WO-A1-2013/017606
- WO-A1-2015/077687
- WO-A1-2016/164742
- CN-A- 103 146 292
- CN-A- 106 243 937
- CN-A- 109 517 150
- CN-B- 106 046 711
- JP-A- 2006 070 082

## Description

### FIELD OF THE INVENTION

The present disclosure belongs to the field of polyester resin synthesis technologies, and more particularly, to a polyester resin composition, a powder coating, and a workpiece.

### BACKGROUND OF THE INVENTION

A powder coating is a solid powder coating composed of a solid resin, a pigment, a filler, an additive, and the like, and has advantages of solvent-free and VOC-free characteristics, recyclability, easy spraying (a thickness of 30 µm to 500 µm may be reached by coating once), excellent comprehensive performance, low cost, and the like. Therefore, the powder coating is widely used in household appliances, mechanical devices, anti-corrosion pipelines, building materials, and other fields. Although the advantages of the powder coating are outstanding, compared with a liquid coating, a conventional thermosetting powder coating has a higher curing temperature (180°C to 200°C) and longer curing time (10 minutes to 30 minutes), and needs to consume more energy during curing. In addition, since the conventional powder coating needs to be cured at a higher temperature, the conventional powder coating is limited to be used on heat-resistant metal substrates only, and is not suitable for heat-sensitive substrates such as wood, paper, plastic, and the like. With requirements of social energy saving and emission reduction and expansion of application fields of the powder coating, curing conditions of the conventional powder coating cannot meet new development requirements, so a low-temperature curing powder coating has become a development trend of the powder coating industry at present.

According to its glossiness, a coat of the powder coating may be divided into high gloss, semi gloss, low gloss, and no gloss. Generally, a high gloss coating is suitable for noble and luxurious decoration, while a low gloss coating is suitable for a quiet, comfortable, and elegant environment. However, the high gloss coating may cause serious light pollution and harm to eyes. In addition, aesthetic concepts of consumers are changed, and the consumers prefer a leisure and comfortable living environment. Therefore, a matting powder coating capable of producing a soft surface effect has been widely used.

At present, commonly used matting methods of the powder coating mainly comprise the following methods: (1) filler filling method: this method is generally suitable for preparing a powder coating with a glossiness greater than 40%; (2) incompatible substance surface precipitation method: according to this method, a flatness of a coat surface is usually destroyed by adding a wax substance and precipitating it on the surface to achieve a matting effect, but the wax substance precipitated on the coat surface is easy to be washed and aged during outdoor use of the coat, so that the glossiness of the coat is often greatly changed with extension of use time; (3) matting agent matting method: this method realizes matting by adding a matting agent, and a matting glossiness may be selected from a large range of no gloss to medium gloss; since the matting agent is generally expensive, this method is more suitable for preparing a powder coating with a glossiness lower than 20%; (4) dry-mixed matting method: the reactive activity differences of different polyesters with large differences in reactive activity during curing are used in this method, resulting in a microscopic rough surface on the coat surface, thus achieving the matting effect; a glossiness of 20% to 40% may be obtained without adding a matting assistant by using this method.

The US patent application US5907006A discloses a composition for the coating of substrates of matt surface appearance comprising a thermoplastic or heat-curable resin such as PA, PP, polyester resins, epoxy resins, and a certain amount of matting agent (main ingredients are terephthalic acid dianilide and a derivative thereof). The US patent application US5436311A discloses a composition of a polyester resin and an acrylic resin with an epoxy group, and a matting powder coating comprising the composition; the powder composition may be sprayed by an electric spray gun, and may be cured at 160°C to 210°C. The US patent application US6660398B1 discloses a thermosetting powder coating composition comprising a blend of an amorphous polyester resin containing carboxyl groups, a semicrystalline polyester resin, and a crosslinking curing agent reacting with the carboxyl; a semi-gloss and low-gloss coating with a glossiness lower than 50% (60°) may be obtained after curing the thermosetting powder coating composition, and the coat has a good weather resistance and a good mechanical property. The US patent application US9873817B2 discloses a branched carboxylic acid polyester and a use thereof in preparation of a powder coating composition, the composition has a low glossiness when combined with a standard powder coating polyester and a crosslinking agent, a coat with a glossiness lower than 35% may be obtained, and the curing temperature of the composition is 160°C to 250°C, preferably 200°C. The US patent application US5264529A discloses a set of high-acid-value and low-acid-value polyesters for preparing a matting powder coating, and coats from semi gloss to no gloss may be obtained by curing the matting powder coating with TGIC. The US patent application US5491202A discloses a preparation method of a three-ingredient dry-mixed matting powder coating, and the power coating is cured at 200°C for 10 minutes, or cured at 180°C for 20 minutes. The US patent application US5741602A discloses a weather-resistant two-ingredient polyester and a preparation method of a powder coating composition thereof, β-hydroxyalkylamide is used as a curing agent in the powder coating composition, and a glossiness of a coat formed by the coating cured at 200°C is lower than 40% (60°).

The Chinese patent application CN106045711A discloses a preparation method of a polyester resin composition for a dry-mixed matting thermal transfer printing powder coating, the composition is suitable for TGIC curing, and a curing temperature is 200°C. The Chinese patent application CN109517149A discloses a formula of hydrolysis-resistant polyester resin for dry-mixed powder coating, a surface of a prepared coat is still intact after being soaked in boiling water without an obvious dulling phenomenon, and its low-acid ingredient has an acid value of 3 mgKOH/g to 27 mgKOH/g, thus being not suitable for low-temperature curing occasions. The Chinese patent application CN101445591A discloses a preparation method of polyester resin with high-acid-value and low-acid-value for environment-friendly dry blended low-gloss powder coating, the polyester resin is suitable for a HAA system, and has a curing temperature of 180°C. The Chinese patent CN103131308B discloses a preparation method of high-low acid value bi-component carboxyl-terminated polyester resin composition for super-weather-resistant dry-mixed matting powder coating, the polyester composition is suitable for TGIC and HAA systems at the same time, and has excellent weather resistance and matting effect, and the composition is suitable for curing at a temperature higher than 180°C. The Chinese patent CN106243937B discloses a dry-mixed matting powder coating with good low-temperature curing property and a preparation method thereof, which is synthesized by using hydroxyl-terminated perfluoropolyether, and low-temperature curing at 140°C to 160°C and a matting effect of 20% to 40% may be realized at the same time by increasing an acid value of a high-acid polyester to 65 mg/KOH to 75 mg/KOH and adding pyromellitic anhydride into a low-acid ingredient as an acidolysis agent to improve a carboxyl-terminated activity. The Chinese patent application CN107936788A discloses a preparation method of a dry-mixed matting polyester resin composition for thermal transfer printing, wherein the curing temperature of the composition may be as low as 160°C. The Chinese patent CN106046711B discloses a dry-mixing and matte type polyester resin composition for thermal transfer powder coating, comprising a high-acid value carboxy-terminated polyester resin (A) and a low-acid value carboxy-terminated polyester resin (B), wherein the polyester resin (A) has an acid value of 47-55 mg KOH/g, a melt viscosity of 7000-10000 mPa.s, and a glass transition temperature of 63-71°C, and is prepared by reacting 25-45 wt.% polyol, 45-60 wt.% aromatic polybasic acid, 0-2 wt.% aliphatic polybasic acid, 0-1 wt.% branching agent, 5-20 wt.% acidifying agent, 0.01-0.2 wt.% esterification catalyst, 0-0.2 wt.% thermal transfer additive, 0.05-0.2 wt.% thermal stabilizer and 0.2-1 wt.% antioxidant at 180° C for 50-200 seconds. The polyester resin (B) has an acid value of 18-24 mg KOH/g, a melt viscosity of 4000-9000 mPa.s, and a glass transition temperature of 58-68°C, and is prepared by reacting 25-45 wt.% polyol, 45-60 wt.% aromatic polybasic acid, 0-2 wt.% aliphatic polybasic acid, 0-1 wt.% branching agent, 3-12 wt.% acidifying agent, 0.01-0.2 wt.% esterification catalyst, 0.02-0.2 wt.% thermal transfer additive, 0.05-0.2 wt.% thermal stabilizer and 0.2-1 wt.% antioxidant at 180°C for 300-600 seconds.

In the above matting methods for the powder coating, dry-mixed preparation of the matting powder coating with the high-acid-value and low-acid-value polyester resins is an economical and simple method to obtain the matting coat, while the low-temperature curing is also a future development trend of the powder coating. However, there are some problems in low-temperature curing of an existing dry-mixed matting powder coating at present. (1) In order to ensure a weather resistance of the coat under low-temperature curing, a weather resistance of the resin is generally improved by adding a high content of isophthalic acid (IPA), but a problem of mechanical property degradation of the resin may be caused. (2) In order to ensure a leveling appearance and a mechanical property of the coat under low-temperature curing, a glass transition temperature (Tg) of the polyester resin is generally low, which may further cause easy agglomeration of the prepared powder coating in storage.

Through a lot of researches and experiments, the inventor of the present disclosure found that a weather resistance of the matting powder coating during low-temperature curing could be improved without sacrificing the mechanical property of the coat by introducing a structure similar to an o-hydroxybenzophenone into a polyester resin structure and shielding an ester bond which is easy to be hydrolyzed with a hydrogenated dimer acid at the same time. In addition, polymerizing the hydrogenated bisphenol A into a main chain of the polyester by a specific synthesis process can make up for the decrease of the glass transition temperature of the polyester caused by introduction of the hydrogenated dimer acid, and improve the glass transition temperature of the polyester resin without sacrificing the mechanical property of the coat, which is beneficial for improving a storage stability of the matting powder coating.

### SUMMARY OF THE INVENTION

In order to solve the above technical problems, the present invention provides a polyester resin composition, a powder coating, and a workpiece.

The technical solutions adopted in the present invention are as follows: a polyester resin composition comprising a high-acid-value carboxyl-terminated polyester resin and a low-acid-value carboxyl-terminated polyester resin, wherein:
the high-acid-value carboxyl-terminated polyester resin has an acid value of 75 mgKOH/g to 90 mgKOH/g, a melt viscosity of 2,000 mPa•s to 6,000 mPa•s at 200°C, and a glass transition temperature of 55°C to 62°C; and the high-acid-value carboxyl-terminated polyester resin is prepared from the following raw materials in percentage by mass: 26% to 46% of polyol, 0.2% to 6% of branching agent, 45% to 70% of polyacid, 0.1% to 3% of partially carboxylated benzophenone compound, 5% to 18% of acidolysis agent, 0.05% to 0.25% esterification catalyst, 0.06% to 0.3% of heat stabilizer, and 0.2% to 1.2% of antioxidant; and
the low-acid-value carboxyl-terminated polyester resin has an acid value of 30 mgKOH/g to 37 mgKOH/g, a melt viscosity of 2000 mPa•s to 7000 mPa•s at 200°C, and a glass transition temperature of 51°C to 60°C; and the low-acid-value carboxyl-terminated polyester resin is prepared from the following raw materials in percentage by mass: 34% to 57% of polyol, 0.1% to 2% of branching agent, 43% to 65% of polyacid, 0.1% to 3% of partially carboxylated benzophenone compound, 2% to 10% of acidolysis agent, 0.05% to 0.25% of esterification catalyst, 0.06% to 0.3% of heat stabilizer, and 0.2% to 1.2% of antioxidant;
and wherein the partially carboxylated benzophenone compound is prepared by a preparation method comprising the following steps of: adding 2,2',4,4'-tetrahydroxybenzophenone and a mixed solvent of N,N-dimethylformamide and tetrahydrofuran into a reaction kettle under protection of protective gas, keeping a reaction temperature at 20°C to 25°C, slowly adding sodium hydride, then adding a tetrahydrofuran solution of pyromellitic anhydride when there are no bubbles generated, reacting at 20°C to 25°C for 3 hours to 8 hours, adjusting a pH value to 4 to 5, extracting, washing with water, and drying to obtain the partially carboxylated benzophenone compound. Nitrogen or inert gas is generally used as protective gas, and the inert gas comprises helium, neon, argon, krypton, xenon, and radon; and the protective gas is preferably selected from nitrogen. Preferably, in the raw materials of the low-acid-value carboxyl-terminated polyester resin, the polyacid comprises a hydrogenated dimer acid; and the hydrogenated dimer acid may be specifically selected from Pripol 1006. Pripol 1009 or Pripol 1025 produced by CRODA, and the Pripol 1009 produced by CRODA is preferred. In the raw materials of the low-acid-value carboxyl-terminated polyester resin, if the polyacid comprises the hydrogenated dimer acid, the polyol preferably comprises hydrogenated bisphenol A. and a content of the hydrogenated bisphenol A is generally from 3.5 wt% to 30 wt% based on a content of the polyol.

Preferably, a molar ratio of the 2,2',4,4'-tetrahydroxybenzophenone, the pyromellitic anhydride, and the sodium hydride is 1:2:2.

Preferably, in the raw materials of the high-acid-value carboxyl-terminated polyester resin, the polyacid is at least one selected from the group consisting of isophthalic acid, terephthalic acid, phthalic acid, adipic acid and succinic acid, and a content of the isophthalic acid is no less than 15 mol% of a content of the polyacid.

Preferably, in the raw materials of the low-acid-value carboxyl-terminated polyester resin, the polyacid is at least two selected from the group consisting of isophthalic acid, hydrogenated dimer acid, terephthalic acid, phthalic acid, adipic acid and succinic acid, a content of the isophthalic acid is no less than 10 mol% of the content of the polyacid, and a content of the hydrogenated dimer acid is no less than 6 wt% of the content of the polyacid.

Preferably, in the raw materials of the high-acid-value carboxyl-terminated polyester resin, the polyol is at least one selected from the group consisting of neopentyl glycol, ethanediol, butanediol, 1,3-propanediol, 2-methyl-1,3-propanediol, diglycol and 1,4-cyclohexanedimethanol, and a content of the neopentyl glycol is no less than 65 mol% of a content of the polyol.

Preferably, in the raw materials of the low-acid-value carboxyl-terminated polyester resin, the polyol is at least two selected from the group consisting of neopentyl glycol, hydrogenated bisphenol A, ethanediol, butanediol, 1,3-propanediol, 2-methyl-1,3-propanediol, diglycol and 1,4-cyclohexanedimethanol, a content of the neopentyl glycol is no less than 69 mol% of the content of the polyol, and a content of the hydrogenated bisphenol A is from 3.5 wt% to 30 wt% based on the content of the polyol.

Preferably, in the raw materials of the high-acid-value carboxyl-terminated polyester resin, the branching agent is at least one selected from the group consisting of trimethylolpropane, trihydroxyethyl propane and pentaerythritol; and in the raw materials of the low-acid-value carboxyl-terminated polyester resin, the branching agent is at least one selected from the group consisting of trimethylolpropane and trihydroxyethyl propane.

Preferably, in the raw materials of the high-acid-value carboxyl-terminated polyester resin, the acidolysis agent is at least one selected from the group consisting of isophthalic acid, trimellitic anhydride and pyromellitic anhydride, and a content of the pyromellitic anhydride is no less than 20 mol% of a content of the acidolysis agent; and in the raw materials of the low-acid-value carboxyl-terminated polyester resin, the acidolysis agent is at least one selected from the group consisting of isophthalic acid, trimellitic anhydride and pyromellitic anhydride, and a content of the pyromellitic anhydride is no less than 7 mol% of the content of the acidolysis agent.

Preferably, in the raw materials of the high-acid-value carboxyl-terminated polyester resin and the raw materials of the low-acid-value carboxyl-terminated polyester resin, the esterification catalyst is at least one selected from the group consisting of monobutyltin oxide, butyltin tris(2-ethylhexanoate) and stannous oxalate; the heat stabilizer is selected from triphenyl phosphite; and the antioxidant is at least one selected from the group consisting of a hindered phenol antioxidant and a phosphite antioxidant. More preferably, the antioxidant is at least one selected from the group consisting of [pentaerythritol tetrakis(β-(3,5-di-tert-butyl-4-hydroxyphenyl)propionate] (1010) and tetrakis(2,4-di-tert-butylphenyl)4,4'-diphenyl)-bis-phosphonate ester(P-EPQ).

Preferably, the high-acid-value carboxyl-terminated polyester resin is prepared by a preparation method comprising the following steps of: adding the polyol, the branching agent, the heat stabilizer, and the esterification catalyst into a reaction vessel, heating to 160°C to 180°C under protection of protective gas, adding the polyacid, introducing the protective gas, continuously heating to react, gradually heating to 245°C to 250°C, and reacting until a reaction material becomes clear and has an acid value of 10 mgKOH/g to 20 mgKOH/g; then cooling to 235°C to 240°C, adding the acidolysis agent and the partially carboxylated benzophenone compound, reacting until the reaction material has an acid value of 90 mgKOH/g to 100 mgKOH/g, subjecting to a polycondensation reaction under vacuum until an acid value is 75 mgKOH/g to 90 mgKOH/g and a melt viscosity is 2,000 mPa·s to 6,000 mPa·s at 200°C, stopping vacuumizing, adding the antioxidant, stirring and dispersing evenly, and then discharging. Nitrogen or inert gas is generally used as protective gas, and the inert gas comprises helium, neon, argon, krypton, xenon and radon; and the protective gas is preferably selected from the nitrogen.

Preferably, the low-acid-value carboxyl-terminated polyester resin is prepared by a preparation method comprising the following steps of: adding the polyol, the branching agent, the heat stabilizer, and the esterification catalyst into a reaction vessel, heating to 160°C to 180°C under protection of protective gas, adding the polyacid, introducing the protective gas, continuously heating to react , gradually heating to 245°C to 250°C, and reacting until a reaction material becomes clear and has an acid value of 9 mgKOH/g to 20 mgKOH/g; cooling to 235°C to 240°C, adding the acidolysis agent and the partially carboxylated benzophenone compound, reacting until the reaction material has an acid value of 42 mgKOH/g to 48 mgKOH/g, subjecting to a polycondensation reaction under vacuum until the acid value is 30 mgKOH/g to 37 mgKOH/g and a melt viscosity is 2,000 mPa·s to 7,000 mPa·s at 200°C, stopping vacuumizing, adding antioxidant, stirring and dispersing uniformly, and discharging. Similarly, nitrogen or inert gas is generally used as protective gas, and the inert gas comprises helium, neon, argon, krypton, xenon and radon; and the nitrogen is preferred.

More preferably, in the raw materials of the low-acid-value carboxyl-terminated polyester resin, the polyacid comprises the isophthalic acid and the hydrogenated dimer acid; the polyol comprises the neopentyl glycol and the hydrogenated bisphenol A; and
the low-acid-value carboxyl-terminated polyester resin is prepared by a preparation method comprising the following steps of: adding other polyols except the hydrogenated bisphenol A, the branching agent, the heat stabilizer and the esterification catalyst into a reaction vessel, heating to 160°C to 180°C under protection of protective gas, adding the polyacid, introducing the protective gas, continuously heating to react, gradually heating to 245°C to 250°C, and reacting until a reaction material is clear and has an acid value of 9 mgKOH/g to 20 mgKOH/g; adding the hydrogenated bisphenol A, keeping a temperature at 245°C to 250°C, and reacting until the reaction material becomes clear and has an acid value of 5 mgKOH/g to 15 mgKOH/g; cooling to 235°C to 240°C, adding the acidolysis agent and the partially carboxylated benzophenone compound, reacting until the reaction material has an acid value of 42 mgKOH/g to 48 mgKOH/g, subjecting to a polycondensation reaction under vacuum until the acid value is 30 mgKOH/g to 37 mgKOH/g and a melt viscosity is 2,000 mPa·s to 7,000 mPa·s at 200°C, stopping vacuumizing, adding antioxidant, stirring and dispersing uniformly, and discharging. Polymerizing the hydrogenated bisphenol A into a main chain of the polyester resin through the above-mentioned specific synthesis process can improve the glass transition temperature of the polyester resin without sacrificing a mechanical property of a coat, which is beneficial for improving a storage stability of a matting powder coating and an impact resistance of the coat meanwhile.

The polyester resin composition of the invention is used in the preparation of a powder coating, such as a dry-mixed matting powder coating. Therefore, the present invention further provides a powder coating comprising the polyester resin composition of the invention, wherein the powder coating is composed of a powder coating I and a powder coating II according to a mass ratio of (0.5 -2):1, a curing temperature of the powder coating is 140°C to 160°C, and curing time of the powder coating is 10 minutes to 30 minutes. The raw material ingredients of the powder coating I comprise the high-acid-value carboxyl-terminated polyester resin, a curing agent, a pigment, a filler and an additive, and the raw material ingredients of the powder coating II comprise the low-acid-value carboxyl-terminated polyester resin, a curing agent, a pigment, a filler and an additive. Specifically, the powder coating may be the dry-mixed matting powder coating.

Preferably, in the raw material ingredients of the powder coating I and the raw material ingredients of the powder coating II, the curing agent comprises a compound with at least two β-hydroxyalkylamide groups.

A preparation method of the above powder coating comprises the following steps of: weighing and mixing the synthesized high-acid-value carboxyl-terminated polyester resin and low-acid-value carboxyl-terminated polyester resin with an equivalent ratio of curing agent, pigment, filler, and assistant by a ratio respectively, melting and extruding, cooling and smashing, crushing and sieving to prepare the powder coating I and the powder coating II; and then mixing the powder coating I and the powder coating II according to a mass ratio of (0.5- 2):1 to obtain a finished powder coating.

In addition, the above powder coating is used to apply to the surface of the workpiece to form a protective coat. Therefore, the present invention further provides a workpiece, wherein a coat formed by the above powder coating is attached to a surface of the workpiece.

The present invention has the following beneficial technical effects: the present invention provides a polyester resin composition, a powder coating, and a workpiece, a photo-aging performance of the polyester resin composition can be improved by introducing the partially carboxylated benzophenone compound into the polyester resin structure; the polyester resin composition is suitable to use in the dry-mixed matting powder coating, and may be cured at 140°C to 160°C; a semi-gloss or low-gloss coat may be obtained by dry-mixed matting, and the cured coat has excellent mechanical property and weather resistance. That is, the polyester resin composition can improve the weather resistance during low-temperature curing of the matting powder coating without sacrificing the mechanical property of the coat, and meanwhile, the powder coating has a good storage stability.

### DETAILED DESCRIPTION OF THE EMBODIMENTS

The present invention is further explained hereinafter with reference to the specific embodiments. It shall be understood that the embodiments are only used for describing the present invention and are not intended to limit the present invention.

In addition, it shall be understood that after reading the contents described in the present invention, those skilled in the art may make various changes or modifications to the present invention, and these equivalent forms also fall within the scope defined by the appended claims of the present application.

Preparation of a partially carboxylated benzophenone compound, comprised the following specific steps:
taking 2,2',4,4'-tetrahydroxybenzophenone, pyromellitic anhydride and sodium hydride according to a molar ratio of 1:2:2; under protection of nitrogen, adding 2,2',4,4'-tetrahydroxybenzophenone into a reaction kettle first, then adding a mixed solvent of N,N-dimethylformamide and tetrahydrofuran (with a volume ratio of 2:1), keeping a reaction temperature at 20°C, adding the sodium hydride slowly, dropwise adding a tetrahydrofuran solution of pyromellitic anhydride when there were no bubbles generated, reacting at 20°C for 5 hours after finishing adding the tetrahydrofuran solution of pyromellitic anhydride, dropwise adding 5% dilute sulfuric acid slowly, adjusting a pH value to 4 to 5, extracting the mixture with a mixed solution of chloroform and ethyl acetate (with a volume ratio of 1:1), finally washing with distilled water for three times, and drying an extract liquor at 80°C to obtain the partially carboxylated benzophenone compound.

Table 1 showed the examples and the comparative examples of a high-acid-value carboxyl-terminated polyester resin of the present disclosure (a unit of the following raw materials was g), wherein the Examples a to e were the embodiments provided by the present disclosure, and the Comparative Examples f to h were the comparative examples; and the partially carboxylated benzophenone compound prepared above was used in the raw materials of the Examples a to e.

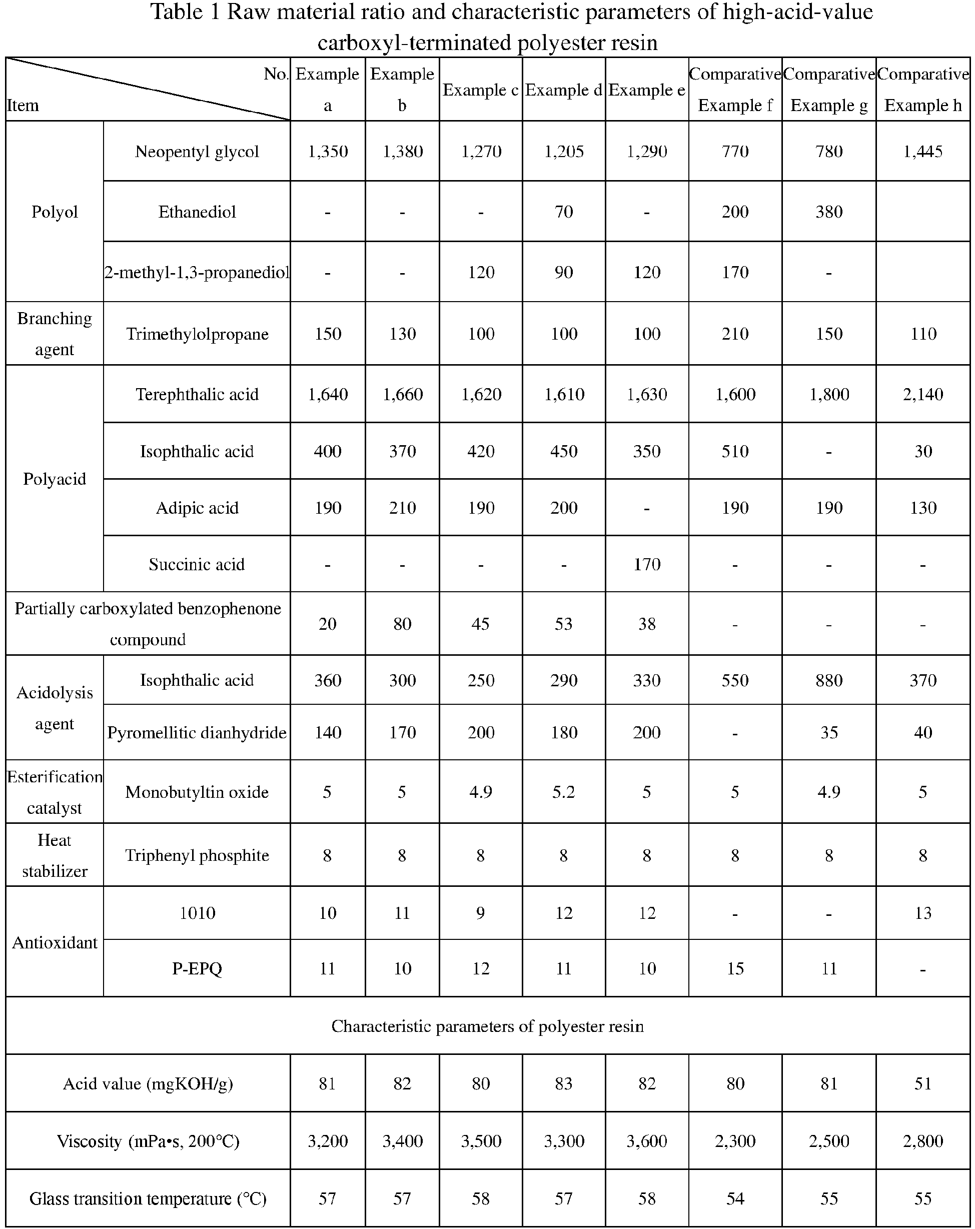

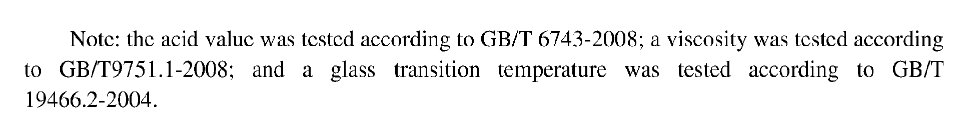

Preparation methods of the above Examples a to e, comprised the following specific steps:
1) adding the polyol, the branching agent, the heat stabilizer and the esterification catalyst into the reaction vessel according to the raw material ratio in Table 1, heating to 170°C under protection of nitrogen, adding the polyacid, introducing the nitrogen, continuously heating to react to 180°C until esterified water started to be generated and distilled, then gradually heating to 245°C, reacting for 2 hours to 5 hours until the reaction material was clear, a sampling test was carried out, and a standard was reached when the acid value was 10 mgKOH/g to 20 mgKOH/g, so as to obtain an esterification product;
2) colling to 240°C, simultaneously adding the acidolysis agent and the partially carboxylated benzophenone compound into the above esterification product, subjecting to an acidolysis reaction for 2 hours to 5 hours until the acid value reached 90 mgKOH/g to 100 mgKOH/g, so as to obtain an acidolysis product;
3) subjecting the above acidolysis product to a polycondensation reaction for 1 hour to 3 hours at a vacuum degree of -0.095 MPa until the acid value reached 75 mgKOH/g to 90 mgKOH/g, and the melt viscosity reached 2,000 mPa•s to 6,000 mPa•s at 200°C, stopping vacuumizing, adding the antioxidant, stirring and dispersing evenly, and then discharging to obtain the polyester resin.

Preparation methods of the above Comparative Examples f and g, comprised the following specific steps:
1) adding the polyol, the branching agent, the heat stabilizer and the esterification catalyst into the reaction vessel according to the raw material ratio in Table 1, heating to 170°C under protection of nitrogen, adding the polyacid, introducing the nitrogen, continuously heating to react to 180°C until esterified water started to be generated and distilled, then gradually heating to 245°C, reacting for 2 hours to 5 hours until the reaction material was clear, a sampling test was carried out, and a standard was reached when the acid value was 10 mgKOH/g to 20 mgKOH/g, so as to obtain an esterification product;
2) colling to 240°C, adding the acidolysis agent into the above esterification product, subjecting to an acidolysis reaction for 2 hours to 5 hours until the acid value reached 90 mgKOH/g to 100 mgKOH/g, so as to obtain an acidolysis product;
3) subjecting the above acidolysis product to a polycondensation reaction for 1 hour to 3 hours at a vacuum degree of -0.095 MPa until the acid value reached 75 mgKOH/g to 90 mgKOH/g, and the melt viscosity reached 2,000 mPa•s to 6,000 mPa•s at 200°C, stopping vacuumizing, adding the antioxidant, stirring and dispersing evenly, and then discharging to obtain the polyester resin.

A preparation method of the above Comparative Example h, comprised the following specific steps:
1) adding the polyol, the branching agent, the heat stabilizer and the esterification catalyst into the reaction vessel according to the raw material ratio in Table 1, heating to 170°C under protection of nitrogen, adding the polyacid, introducing the nitrogen , continuously heating to react to 180°C unitil esterified water started to be generated and distilled, then gradually heating to 245°C, reacting for 2 hours to 5 hours until the reaction material was clear, a sampling test was carried out, and a standard was reached when the acid value was 10 mgKOH/g to 20 mgKOH/g, so as to obtain an esterification product;
2) colling to 240°C, adding the acidolysis agent into the above esterification product, subjecting to an acidolysis reaction for 2 hours to 5 hours until the acid value reached 60 mgKOH/g to 70 mgKOH/g, so as to obtain an acidolysis product;
3) subjecting the above acidolysis product to a polycondensation reaction for 1 hour to 3 hours at a vacuum degree of -0.095 MPa until the acid value reached 48 mgKOH/g to 56 mgKOH/g, and the melt viscosity reached 2,000 mPa•s to 6,000 mPa•s at 200°C, stopping vacuumizing, adding the antioxidant, stirring and dispersing evenly, and then discharging to obtain the polyester resin.

Table 2 showed the examples and the comparative examples of a low-acid-value carboxyl-terminated polyester resin in the present disclosure (a unit of the following ingredients was g), wherein the Examples i to m were the embodiments provided by the present disclosure, and the Comparative Examples n to p were the comparative examples; and the partially carboxylated benzophenone compound prepared above was used in the raw materials of the Examples i to m.

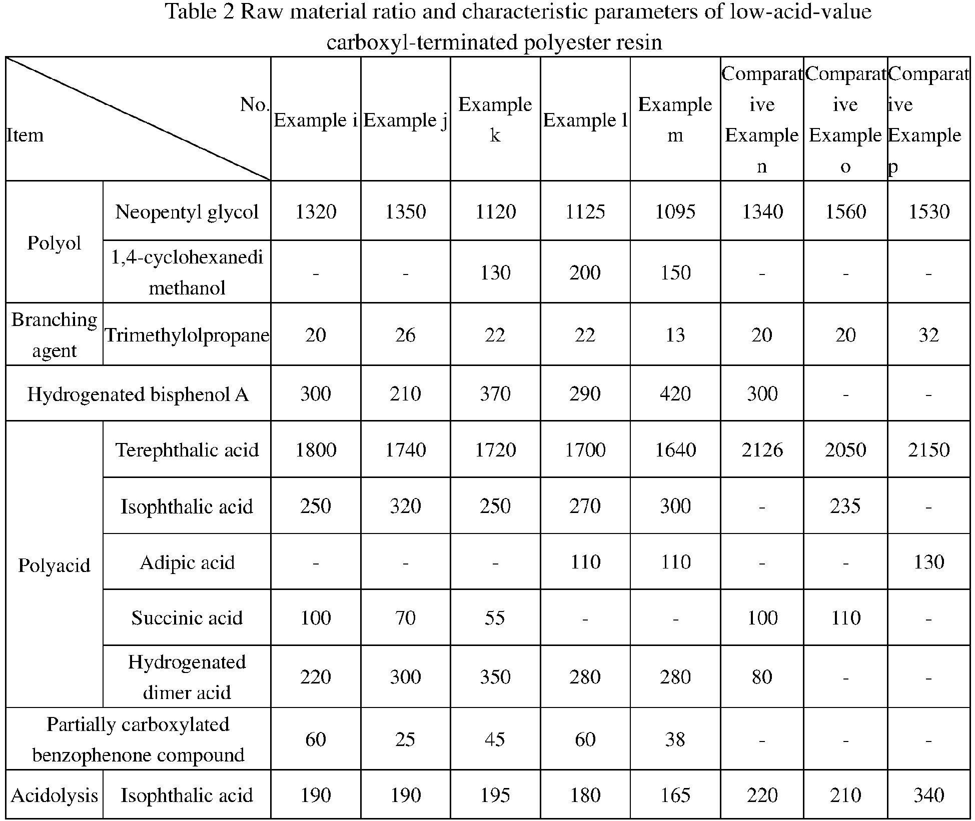

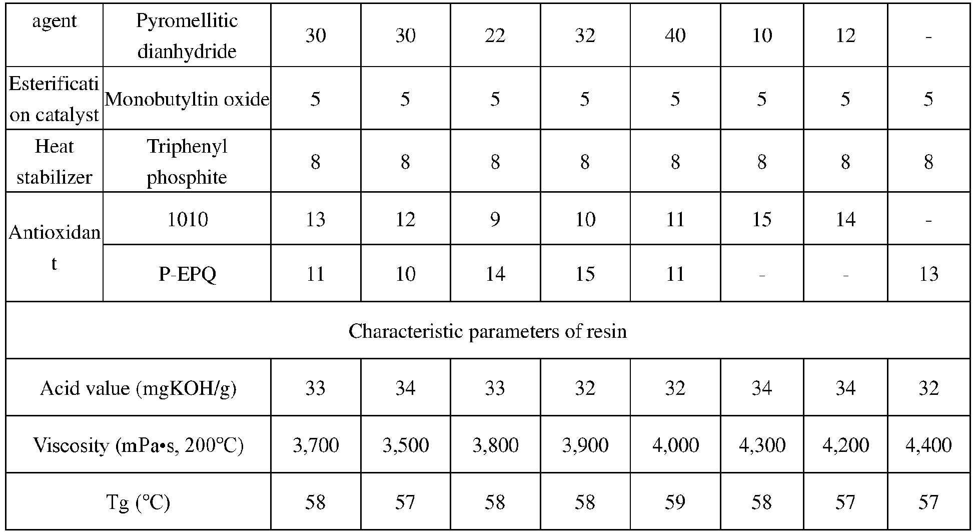

Preparation methods of the above Embodiments i to m, comprised the following specific steps:
1) adding the polyol, the branching agent, the heat stabilizer and the esterification catalyst into the reaction vessel according to the raw material ratio in Table 2, heating to 170 °C under protection of nitrogen, adding the polyacid, introducing the nitrogen, continuously heating to react to 180°C until esterified water started to be generated and distilled, then gradually heating to 245°C, reacting for 2 hours to 5 hours until the reaction material was clear, a sampling test was carried out, and a standard was reached when the acid value was 9 mgKOH/g to 20 mgKOH/g;
2) adding a proportional amount of hydrogenated bisphenol A, keeping the temperature at 245°C for 2 hours to 4 hours until the reaction material was clear, a sampling test was carried out, and the acid value was 5 mgKOH/g to 15 mgKOH/g, so as to obtain an esterification product;
3) cooling to 240°C, simultaneously adding the acidolysis agent and the partially carboxylated benzophenone compound into the above esterification product, subjecting to an acidolysis reaction for 2 hours to 5 hours until the acid value reached 42 mgKOH/g to 48 mgKOH/g, so as to obtain an acidolysis product;
4) subjecting the above acidolysis product to a polycondensation reaction for 1 hour to 3 hours at a vacuum degree of -0.095 MPa until the acid value reached 30 mgKOH/g to 37 mgKOH/g, and the melt viscosity reached 2,000 mPa•s to 7,000 mPa•s at 200°C, stopping vacuumizing, adding the antioxidant, stirring and dispersing evenly, and then discharging to obtain the polyester resin.

A preparation method of the Comparative Example n, comprised the following specific steps:
1) adding the polyol, the branching agent, the hydrogenated bisphenol A, the heat stabilizer and the esterification catalyst into the reaction vessel according to the raw material ratio in Table 2, heating to 170°C under protection of nitrogen, adding the polyacid, introducing the nitrogen , continuously heating to react to 180°Cuntil esterified water started to be generated and distilled, then gradually heating to 245°C, reacting for 2 hours to 5 hours until the reaction material was clear, a sampling test was carried out, and a standard was reached when the acid value was 5 mgKOH/g to 15 mgKOH/g.
2) cooling to 240°C, adding the acidolysis agent into the above esterification product, subjecting to an acidolysis reaction for 2 hours to 5 hours until the acid value reached 42 mgKOH/g to 48 mgKOH/g, so as to obtain an acidolysis product;
3) subjecting the above acidolysis product to a polycondensation reaction for 1 hour to 3 hours at a vacuum degree of -0.095 MPa until the acid value reached 30 mgKOH/g to 37 mgKOH/g, and the melt viscosity reached 2,000 mPa•s to 7,000 mPa•s at 200°C, stopping vacuumizing, adding the antioxidant, stirring and dispersing evenly, and then discharging to obtain the polyester resin.

Preparation methods of the Comparative Examples o and p, comprised the following specific steps:
1) adding the polyol, the branching agent, the heat stabilizer and the esterification catalyst into the reaction vessel according to the raw material ratio in Table 2, heating to 170°C under protection of nitrogen, adding the polyacid, introducing the nitrogen, continuously heating to react to 180°C until esterified water started to be generated and distilled, then gradually heating to 245°C, reacting for 2 hours to 5 hours until the raction material was clear, a sampling test was carried out, and a standard was reached when the acid value was 5 mgKOH/g to 15 mgKOH/g;
2) cooling to 240°C, adding the acidolysis agent into the above esterification product, subjecting to an acidolysis reaction for 2 hours to 5 hours until the acid value reached 42 mgKOH/g to 48 mgKOH/g, so as to obtain an acidolysis product;
3) subjecting the above acidolysis product to polycondensation for 1 hour to 3 hours at a vacuum degree of -0.095 MPa until the acid value reached 30 mgKOH/g to 37 mgKOH/g, and a melt viscosity reached 2,000 mPa•s to 7,000 mPa•s at 200°C, stopping vacuumizing , adding the antioxidant, stirring and dispersing evenly, and then discharging to obtain the polyester resin.

The powder coating was prepared by the following step: selecting the high-acid-value carboxyl-terminated polyester resin synthesized in Table 1 and the low-acid-value carboxyl-terminated polyester resin synthesized in Table 2, weighting and evenly mixing the synthesized polyester resins with the curing agent, the pigment, the filler and the additive by a ratio according to the formula of the powder coating in Table 3, and then melting and extruding, cooling and smashing, crushing and sieving to obtain the powder coating. High-acid-value carboxyl-terminated polyester resins a to h synthesized in Table 1 were respectively used in powder coatings Ia to Ih in Table 3, and low-acid-value carboxyl-terminated polyester resins i to p synthesized in Table 2 were respectively used in powder coatings IIi to IIp. For example, the high-acid-value carboxyl-terminated polyester resin a synthesized in Table 1 was used in the powder coating IIa, the high-acid-value carboxyl-terminated polyester resin b was used in the powder coating IIb, the low-acid-value carboxyl-terminated polyester resin i synthesized in Table 2 was used in the powder coating IIi, and so on.

**Table 3 Formula of powder coating**

| Ingredient | Unit | Powder coating I | | Powder coating II |
|---|---|---|---|---|
| | | Powder coatings Ia to Ig | Powder coating Ih | Powder coatings IIi to IIp |
| High-acid-value carboxyl-terminated polyester resins (a to g) | g | 400 | - | - |
| High-acid-value carboxyl-terminated polyester resin (h) | g | - | 400 | - |
| Low-acid-value carboxyl-terminated polyester resins (i to p) | g | - | - | 400 |
| Primid@XL552 | g | 49 | 30 | 21 |
| Titanium dioxide | g | 160 | 160 | 160 |
| Barium sulfate | g | 120 | 120 | 120 |
| Levelling agent | g | 4.8 | 4.8 | 4.8 |
| Benzoin | g | 2.4 | 2.4 | 2.4 |

The matting coat was prepared by the following step: mixing the powder coating I and the powder coating II by dry mixing according to a mass ratio of (0.5- 2):1 to prepare a dry-mixed matting powder coating; then spraying the matting powder coating on an iron plate, and curing at 140°C to 160°C to obtain the matting coat. Table 4 showed specific experimental results, wherein a mixing ratio of the powder coating I and the powder coating II was 1:1, and it should be noted that selection of the polyester resin and the ratio of two powder coatings in Table 4 was used as a reference rather than a limitation of the present disclosure.

**Table 4 Comparison of coating performances obtained from different examples and comparative examples**

| No. | Example 1 | Example 2 | Example 3 | Example 4 | Example 5 | Comparative Example 1 | Comparative Example 2 | Comparative Example 3 |
|---|---|---|---|---|---|---|---|---|
| Composition of powder coating | Ia to IIi | Ib to IIj | Ic to IIk | Id to IIl | Ie to IIm | If to IIn | Ig to IIo | Ih to IIp |
| Curing condition | 140°C*30 minutes | 150°C*15 minutes | 160°C*10 minutes | 150°C*15 minutes | 150°C*15 minutes | 160°C*15 minutes | 140°C*30 minutes | 150°C*15 minutes |
| Gloss (60°)/% | 32 | 26 | 29 | 28 | 30 | 38 | 52 | 75 |
| Impact resistance/cm | 40 | 50 | 50 | 40 | 40 | 20 | 10 | 10 |
| Xenon lamp 1000 hours gloss retention/% | 90 | 96 | 93 | 90 | 93 | 73 | 62 | 65 |
| Powder | Grade 0 | Grade 0 | Grade 0 | Grade 0 | Grade 0 | Grade 1 | Grade 2 | Grade 2 |
| agglomeration degree (40°C*7 days) | | | | | | | | |

| | | | | | | | | |
|---|---|---|---|---|---|---|---|---|
| Note: the higher the powder agglomeration degree was, the more serious the powder agglomeration tendency was. | | | | | | | | |

It can be seen from the experimental results in Table 4 that, compared with the powder coatings of the Comparative Examples 1 to 3, a lower matting glossiness, a good impact resistance, and an ageing resistance may be obtained by curing the powder coatings of the Examples 1 to 5 of the present disclosure at 140°C to 160°C, and a storage stability of the powder coatings was also more excellent.

Although the present invention is specifically shown and described with reference to the preferred embodiments, those skilled in the art shall understand that various changes may be made in form and detail without departing from the scope of the present invention as defined in the claims, which are all included in the scope of protection of the present invention.

## Claims

1. A polyester resin composition, comprising a high-acid-value carboxyl-terminated polyester resin and a low-acid-value carboxyl-terminated polyester resin, wherein:
the high-acid-value carboxyl-terminated polyester resin has an acid value of 75 mgKOH/g to 90 mgKOH/g, a melt viscosity of 2,000 mPa•s to 6,000 mPa•s at 200°C, and a glass transition temperature of 55°C to 62°C; and the high-acid-value carboxyl-terminated polyester resin is prepared from the following raw materials in percentage by mass: 26% to 46% of polyol, 0.2% to 6% of branching agent, 45% to 70% of polyacid, 0.1% to 3% of partially carboxylated benzophenone compound, 5% to 18% of acidolysis agent, 0.05% to 0.25% esterification catalyst, 0.06% to 0.3% of heat stabilizer, and 0.2% to 1.2% of antioxidant;
the low-acid-value carboxyl-terminated polyester resin has an acid value of 30 mgKOH/g to 37 mgKOH/g, a melt viscosity of 2,000 mPa•s to 7,000 mPa•s at 200°C, and a glass transition temperature of 51°C to 60°C; and the low-acid-value carboxyl-terminated polyester resin is prepared from the following raw materials in percentage by mass: 34% to 57% of polyol, 0.1% to 2% of branching agent, 43% to 65% of polyacid, 0.1% to 3% of partially carboxylated benzophenone compound, 2% to 10% of acidolysis agent, 0.05% to 0.25% of esterification catalyst, 0.06% to 0.3% of heat stabilizer, and 0.2% to 1.2% of antioxidant;
the acid value is tested according to GB/T 6743-2008; the melt viscosity is tested according to GB/T9751.1-2008; and the glass transition temperature is tested according to GB/T 19466.2-2004; and
the partially carboxylated benzophenone compound is prepared by a preparation method comprising the following steps of: adding 2,2',4,4'-tetrahydroxybenzophenone and a mixed solvent of N,N-dimethylformamide and tetrahydrofuran into a reaction kettle under protection of protective gas, keeping a reaction temperature at 20°C to 25°C, slowly adding sodium hydride, then adding a tetrahydrofuran solution of pyromellitic anhydride when there are no bubbles generated, reacting at 20°C to 25°C for 3 hours to 8 hours, adjusting a pH value to 4 to 5, extracting, washing with water and drying to obtain the partially carboxylated benzophenone compound.

2. The polyester resin composition according to claim 1, wherein a molar ratio of the 2,2',4,4'-tetrahydroxybenzophenone, the pyromellitic anhydride and the sodium hydride is 1:2:2.

3. The polyester resin composition according to claim 1, wherein in the raw materials of the high-acid-value carboxyl-terminated polyester resin, the polyacid is at least one selected from the group consisting of isophthalic acid, terephthalic acid, phthalic acid, adipic acid and succinic acid, and a content of the isophthalic acid is no less than 15 mol% of a content of the polyacid; and
in the raw materials of the low-acid-value carboxyl-terminated polyester resin, the polyacid is at least two selected from the group consisting of isophthalic acid, hydrogenated dimer acid, terephthalic acid, phthalic acid, adipic acid and succinic acid, a content of the isophthalic acid is no less than 10 mol% of the content of the polyacid, and a content of the hydrogenated dimer acid is no less than 6 wt% of the content of the polyacid.

4. The polyester resin composition according to claim 3, wherein in the raw materials of the high-acid-value carboxyl-terminated polyester resin, the polyol is at least one selected from the group consisting of neopentyl glycol, ethanediol, butanediol, 1,3-propanediol, 2-methyl-1,3-propanediol, diglycol and 1,4-cyclohexanedimethanol, and a content of the neopentyl glycol is no less than 65 mol% of a content of the polyol; and
in the raw materials of the low-acid-value carboxyl-terminated polyester resin, the polyol is at least two selected from the group consisting of neopentyl glycol, hydrogenated bisphenol A, ethanediol, butanediol, 1,3-propanediol, 2-methyl-1,3-propanediol, diglycol and 1,4-cyclohexanedimethanol, a content of the neopentyl glycol is no less than 69 mol% of the content of the polyol, and a content of the hydrogenated bisphenol A is from 3.5 wt% to 30 wt% based on the content of of the polyol.

5. The polyester resin composition according to claim 1, wherein in the raw materials of the high-acid-value carboxyl-terminated polyester resin, the branching agent is at least one selected from the group consisting of trimethylolpropane, trihydroxyethyl propane and pentaerythritol; and
in the raw materials of the low-acid-value carboxyl-terminated polyester resin, the branching agent is at least one selected from the group consisting of trimethylolpropane and trihydroxyethyl propane.

6. The polyester resin composition according to claim 1, wherein in the raw materials of the high-acid-value carboxyl-terminated polyester resin, the acidolysis agent is at least one selected from the group consisting of isophthalic acid, trimellitic anhydride and pyromellitic anhydride, and a content of the pyromellitic anhydride is no less than 20 mol% of a content of the acidolysis agent; and
in the raw materials of the low-acid-value carboxyl-terminated polyester resin, the acidolysis agent is at least one selected from the group consisting of isophthalic acid, trimellitic anhydride and pyromellitic anhydride, and a content of the pyromellitic anhydride is no less than 7 mol% of the content of the acidolysis agent.

7. The polyester resin composition according to claim 1, wherein in the raw materials of the high-acid-value carboxyl-terminated polyester resin and the raw materials of the low-acid-value carboxyl-terminated polyester resin, the esterification catalyst is at least one selected from the group consisting of monobutyltin oxide, butyltin tris(2-ethylhexanoate) and stannous oxalate; the heat stabilizer is selected from triphenyl phosphite; and the antioxidant is at least one selected from the group consisting of a hindered phenol antioxidant and a phosphite antioxidant.

8. The polyester resin composition according to any one of claims 1 to 7, wherein the high-acid-value carboxyl-terminated polyester resin is prepared by a preparation method comprising the following steps of: adding the polyol, the branching agent, the heat stabilizer, and the esterification catalyst into a reaction vessel, heating to 160°C to 180°C under protection of protective gas, adding the polyacid, introducing the protective gas, continuously heating to react, gradually heating to 245°C to 250°C, and reacting until a reaction material becomes clear and has an acid value of 10 mgKOH/g to 20 mgKOH/g; then cooling to 235°C to 240°C, adding the acidolysis agent and the partially carboxylated benzophenone compound, reacting until the reaction material has an acid value of 90 mgKOH/g to 100 mgKOH/g, subjecting to a polycondensation reaction under vacuum until the acid value is 75 mgKOH/g to 90 mgKOH/g and a melt viscosity is 2,000 mPa·s to 6,000 mPa·s at 200°C, stopping vacuumizing, adding the antioxidant, stirring and dispersing evenly, and then discharging.

9. The polyester resin composition according to any one of claims 1 to 7, wherein the low-acid-value carboxyl-terminated polyester resin is prepared by a preparation method comprising the following steps of: adding the polyol, the branching agent, the heat stabilizer and the esterification catalyst into a reaction vessel, heating to 160°C to 180°C under protection of protective gas, adding the polyacid, introducing the protective gas, continuously heating to react, gradually heating to 245°C to 250°C, and reacting until a reaction material becomes clear and has an acid value of 9 mgKOH/g to 20 mgKOH/g; cooling to 235°C to 240°C, adding the acidolysis agent and the partially carboxylated benzophenone compound, reacting until the reaction material has an acid value of 42 mgKOH/g to 48 mgKOH/g, subjecting to a polycondensation reaction under vacuum until the acid value is 30 mgKOH/g to 37 mgKOH/g and a melt viscosity is 2,000 mPa·s to 7,000 mPa·s at 200°C, stopping vacuumizing, adding antioxidant, stirring and dispersing uniformly, and discharging.

10. The polyester resin composition according to claim 9, wherein in the raw materials of the low-acid-value carboxyl-terminated polyester resin, the polyacid comprises the isophthalic acid and the hydrogenated dimer acid; the polyol comprises the neopentyl glycol and the hydrogenated bisphenol A; and the low-acid-value carboxyl-terminated polyester resin is prepared by a preparation method comprising the following steps of: adding other polyols except the hydrogenated bisphenol A, the branching agent, the heat stabilizer and the esterification catalyst into a reaction vessel, heating to 160°C to 180°C under protection of protective gas, adding the polyacid, introducing the protective gas, continuously heating to react, gradually heating to 245°C to 250°C, and reacting until a reaction material is clear and has an acid value of 9 mgKOH/g to 20 mgKOH/g; adding the hydrogenated bisphenol A, keeping a temperature at 245°C to 250°C, and reacting until the reaction material becomes clear and has an acid value of 5 mgKOH/g to 15 mgKOH/g; cooling to 235°C to 240°C, adding the acidolysis agent and the partially carboxylated benzophenone compound, reacting until the reaction material has an acid value of 42 mgKOH/g to 48 mgKOH/g, subjecting to a polycondensation reaction under vacuum until the acid value is 30 mgKOH/g to 37 mgKOH/g and a melt viscosity is 2,000 mPa·s to 7,000 mPa·s at 200°C, stopping vacuumizing, adding antioxidant, stirring and dispersing uniformly, and discharging.

11. A powder coating, comprising the polyester resin composition according to any one of claims 1 to 10, wherein the powder coating is composed of a powder coating I and a powder coating II according to a mass ratio of (0.5-2):1, a curing temperature of the powder coating is 140°C to 160°C, and curing time of the powder coating is 10 minutes to 30 minutes; raw material ingredients of the powder coating I comprise the high-acid-value carboxyl-terminated polyester resin, a curing agent, a pigment, a filler and an additive, and raw material ingredients of the powder coating II comprise the low-acid-value carboxyl-terminated polyester resin, a curing agent, a pigment, a filler and an additive.

12. The powder coating according to claim 11, wherein in the raw material ingredients of the powder coating I and the raw material ingredients of the powder coating II, the curing agent comprises a compound with at least two β-hydroxyalkylamide groups.

13. A workpiece, wherein a coat formed by the powder coating according to claim 12 is attached to a surface of the workpiece.

## Patentansprüche

1. Polyesterharzzusammensetzung, umfassend ein Carboxyl-terminiertes Polyesterharz mit hohem Säurewert und ein Carboxyl-terminiertes Polyesterharz mit niedrigem Säurewert, wobei:
das Carboxyl-terminierte Polyesterharz mit hohem Säurewert einen Säurewert von 75 mgKOH/g bis 90 mgKOH/g, eine Schmelzviskosität von 2.000 mPa•s bis 6.000 mPa•s bei 200 °C und eine Glasübergangstemperatur von 55 °C bis 62 °C aufweist; und das Carboxyl-terminierte Polyesterharz mit hohem Säurewert aus den folgenden Rohstoffen in Massenprozent hergestellt ist: 26 % bis 46 % Polyol, 0,2 % bis 6 % Verzweigungsmittel, 45 % bis 70 % Polysäure, 0,1 % bis 3 % teilweise carboxylierte Benzophenonverbindung, 5 % bis 18 % Acidolyse-Mittel, 0,05 % bis 0,25 % Veresterungskatalysator, 0,06 % bis 0,3 % Wärmestabilisator und 0,2 % bis 1,2 % Antioxidationsmittel;
das Carboxyl-terminierte Polyesterharz mit niedrigem Säurewert einen Säurewert von 30 mgKOH/g bis 37 mgKOH/g, eine Schmelzviskosität von 2.000 mPa•s bis 7.000 mPa•s bei 200 °C und eine Glasübergangstemperatur von 51 °C bis 60 °C aufweist; und das Carboxyl-terminierte Polyesterharz mit niedrigem Säurewert aus den folgenden Rohstoffen in Massenprozent hergestellt ist: 34 % bis 57 % Polyol, 0,1 % bis 2 % Verzweigungsmittel, 43 % bis 65 % Polysäure, 0,1 % bis 3 % teilweise carboxylierte Benzophenonverbindung, 2 % bis 10 % Acidolyse-Mittel, 0,05 % bis 0,25 % Veresterungskatalysator, 0,06 % bis 0,3 % Wärmestabilisator und 0,2 % bis 1,2 % Antioxidationsmittel;
der Säurewert nach GB/T 6743-2008 getestet ist; die Schmelzviskosität nach GB/T9751.1-2008 getestet ist; und die Glasübergangstemperatur nach GB/T 19466.2-2004 getestet ist; und
die teilweise carboxylierte Benzophenonverbindung durch ein Herstellungsverfahren hergestellt wird, umfassend die folgenden Schritte: Hinzugeben von 2,2',4,4'-Tetrahydroxybenzophenon und einem Lösungsmittelgemisch aus N,N-Dimethylformamid und Tetrahydrofuran in einen Reaktionskessel unter Schutzgas, Halten einer Reaktionstemperatur bei 20 °C bis 25 °C, langsames Hinzugeben von Natriumhydrid, dann Hinzugeben einer Tetrahydrofuran-Lösung von Pyromellitsäureanhydrid, wenn keine Blasen erzeugt werden, Reagieren bei 20 °C bis 25 °C für 3 bis 8 Stunden, Einstellen eines pH-Wertes auf 4 bis 5, Extrahieren, Waschen mit Wasser und Trocknen, um die teilweise carboxylierte Benzophenonverbindung zu erhalten.

2. Polyesterharzzusammensetzung nach Anspruch 1, wobei das Molverhältnis von 2,2',4,4'-Tetrahydroxybenzophenon, Pyromellitsäureanhydrid und Natriumhydrid 1:2:2 beträgt.

3. Polyesterharzzusammensetzung nach Anspruch 1, wobei in den Rohstoffen des Carboxyl-terminierten Polyesterharzes mit hohem Säurewert die Polysäure mindestens eines ist, ausgewählt aus der Gruppe bestehend aus Isophthalsäure, Terephthalsäure, Phthalsäure, Adipinsäure und Bernsteinsäure, und ein Gehalt an Isophthalsäure nicht weniger als 15 Mol-% eines Gehalts der Polysäure beträgt; und
in den Rohstoffen des Carboxyl-terminierten Polyesterharzes mit niedrigem Säurewert die Polysäure mindestens zwei sind, ausgewählt aus der Gruppe bestehend aus Isophthalsäure, hydrierter Dimersäure, Terephthalsäure, Phthalsäure, Adipinsäure und Bernsteinsäure, ein Gehalt an Isophthalsäure nicht weniger als 10 Mol-% des Gehalts an der Polysäure beträgt und ein Gehalt an der hydrierten Dimersäure nicht weniger als 6 Gew.-% des Gehalts der Polysäure beträgt.

4. Polyesterharzzusammensetzung nach Anspruch 3, wobei in den Rohstoffen des Carboxyl-terminierten Polyesterharzes mit hohem Säurewert das Polyol mindestens eines ist, ausgewählt aus der Gruppe bestehend aus Neopentylglykol, Ethandiol, Butandiol, 1,3-Propandiol, 2-Methyl-1,3-propandiol, Diglykol und 1,4-Cyclohexandimethanol und ein Gehalt an Neopentylglykol nicht weniger als 65 Mol-% eines Gehalts des Polyols beträgt; und
in den Rohstoffen des Carboxyl-terminierten Polyesterharzes mit niedrigem Säurewert das Polyol mindestens zwei sind, ausgewählt aus der Gruppe bestehend aus Neopentylglykol, hydriertem Bisphenol A, Ethandiol, Butandiol, 1,3-Propandiol, 2-Methyl-1,3-propandiol, Diglykol und 1,4-Cyclohexandimethanol, ein Gehalt an Neopentylglykol nicht weniger als 69 Mol-% des Gehalts des Polyols beträgt und ein Gehalt an hydriertem Bisphenol A von 3,5 Gew.-% bis 30 Gew.-% basierend auf dem Gehalt des Polyols beträgt.

5. Polyesterharzzusammensetzung nach Anspruch 1, wobei in den Rohstoffen des Carboxyl-terminierten Polyesterharzes mit hohem Säurewert das Verzweigungsmittel mindestens eines ist, ausgewählt aus der Gruppe bestehend aus Trimethylolpropan, Trihydroxyethylpropan und Pentaerythrit; und
in den Rohstoffen des Carboxyl-terminierten Polyesterharzes mit niedrigem Säurewert das Verzweigungsmittel mindestens eines ist, ausgewählt aus der Gruppe bestehend aus Trimethylolpropan und Trihydroxyethylpropan.

6. Polyesterharzzusammensetzung nach Anspruch 1, wobei in den Rohstoffen des Carboxyl-terminierten Polyesterharzes mit hohem Säurewert das Acidolyse-Mittel mindestens eines ist, ausgewählt aus der Gruppe bestehend aus Isophthalsäure, Trimellitsäureanhydrid und Pyromellitsäureanhydrid, und ein Gehalt an Pyromellitsäureanhydrid nicht weniger als 20 Mol-% eines Gehalts des Acidolyse-Mittels beträgt; und
in den Rohstoffen des Carboxyl-terminierten Polyesterharzes mit niedrigem Säurewert das Acidolyse-Mittel mindestens eines ist, ausgewählt aus der Gruppe bestehend aus Isophthalsäure, Trimellitsäureanhydrid und Pyromellitsäureanhydrid, und ein Gehalt an Pyromellitsäureanhydrid nicht weniger als 7 Mol-% des Gehalts des Acidolyse-Mittels beträgt.

7. Polyesterharzzusammensetzung nach Anspruch 1, wobei in den Rohstoffen des Carboxyl-terminierten Polyesterharzes mit hohem Säurewert und den Rohstoffen des Carboxyl-terminierten Polyesterharzes mit niedrigem Säurewert der Veresterungskatalysator mindestens einer ist, ausgewählt aus der Gruppe bestehend aus Monobutylzinnoxid, Butylzinntris(2-ethylhexanoat) und Zinn(II)-Oxalat; der Wärmestabilisator aus Triphenylphosphit ausgewählt ist; und das Antioxidationsmittel mindestens eines ist, ausgewählt aus der Gruppe bestehend aus einem gehinderten Phenol-Antioxidationsmittel und einem Phosphit-Antioxidationsmittel.

8. Polyesterharzzusammensetzung nach einem der Ansprüche 1 bis 7, wobei das Carboxyl-terminierte Polyesterharz mit hohem Säurewert durch ein Herstellungsverfahren hergestellt wird, umfassend die folgenden Schritte: Hinzugeben des Polyols, des Verzweigungsmittels, des Wärmestabilisators und des Veresterungskatalysators in ein Reaktionsgefäß, Erhitzen auf 160 bis 180 °C unter Schutzgas, Hinzugeben der Polysäure, Einleiten des Schutzgases, kontinuierliches Erhitzen zum Reagieren, allmähliches Erhitzen auf 245 bis 250 °C und Reagieren, bis ein Reaktionsmaterial klar wird und einen Säurewert von 10 mgKOH/g bis 20 mgKOH/g aufweist; dann Abkühlen auf 235 bis 240 °C, Hinzugeben des Acidolyse-Mittels und der teilweise carboxylierten Benzophenonverbindung, Reagieren, bis das Reaktionsmaterial einen Säurewert von 90 mgKOH/g bis 100 mgKOH/g aufweist,
Unterziehen einer Polykondensationsreaktion unter Vakuum, bis der Säurewert 75 mgKOH/g bis 90 mgKOH/g beträgt und eine Schmelzviskosität von 2.000 mPa·s bis 6.000 mPa·s bei 200 °C erreicht ist, Beenden des Vakuumierens, Hinzugeben des Antioxidationsmittels, gleichmäßiges Rühren und Dispergieren und dann Entleeren.

9. Polyesterharzzusammensetzung nach einem der Ansprüche 1 bis 7, wobei das Carboxyl-terminierte Polyesterharz mit niedrigem Säurewert durch ein Herstellungsverfahren hergestellt wird, umfassend die folgenden Schritte: Hinzugeben des Polyols, des Verzweigungsmittels, des Wärmestabilisators und des Veresterungskatalysators in ein Reaktionsgefäß, Erhitzen auf 160 bis 180 °C unter Schutzgas, Hinzugeben der Polysäure, Einleiten des Schutzgases, kontinuierliches Erhitzen zum Reagieren, allmähliches Erhitzen auf 245 bis 250 °C und Reagieren, bis ein Reaktionsmaterial klar wird und einen Säurewert von 9 mgKOH/g bis 20 mgKOH/g aufweist; Abkühlen auf 235 bis 240 °C, Hinzugeben des Acidolyse-Mittels und der teilweise carboxylierten Benzophenonverbindung, Reagieren, bis das Reaktionsmaterial einen Säurewert von 42 mgKOH/g bis 48 mgKOH/g aufweist, Unterziehen einer Polykondensationsreaktion unter Vakuum, bis der Säurewert 30 mgKOH/g bis 37 mgKOH/g beträgt und eine Schmelzviskosität von 2.000 mPa·s bis 7.000 mPa·s bei 200 °C erreicht ist, Beenden des Vakuumierens, Hinzugeben von Antioxidationsmittel, gleichmäßiges Rühren und Dispergieren und Entleeren.

10. Polyesterharzzusammensetzung nach Anspruch 9, wobei in den Rohstoffen des Carboxyl-terminierten Polyesterharzes mit niedrigem Säurewert die Polysäure die Isophthalsäure und die hydrierte Dimersäure umfasst; das Polyol das Neopentylglykol und das hydrierte Bisphenol A umfasst; und das Carboxyl-terminierte Polyesterharz mit niedrigem Säurewert durch ein Herstellungsverfahren hergestellt wird, umfassend die folgenden Schritte: Hinzugeben anderer Polyole außer dem hydrierten Bisphenol A, dem Verzweigungsmittel, dem Wärmestabilisator und dem Veresterungskatalysator in ein Reaktionsgefäß, Erhitzen auf 160 bis 180 °C unter Schutzgas, Hinzugeben der Polysäure, Einleiten des Schutzgases, kontinuierliches Erhitzen zum Reagieren,
allmähliches Erhitzen auf 245 bis 250 °C und Reagieren, bis ein Reaktionsmaterial klar wird und einen Säurewert von 9 mgKOH/g bis 20 mgKOH/g aufweist; Hinzugeben des hydrierten Bisphenols A, Halten der Temperatur bei 245 bis 250 °C und Reagieren, bis das Reaktionsmaterial klar wird und einen Säurewert von 5 bis 15 mgKOH/g aufweist; Abkühlen auf 235 bis 240 °C, Hinzugeben des Acidolyse-Mittels und der teilweise carboxylierten Benzophenonverbindung, Reagieren, bis das Reaktionsmaterial einen Säurewert von 42 mgKOH/g bis 48 mgKOH/g aufweist, Unterziehen einer Polykondensationsreaktion unter Vakuum, bis der Säurewert 30 mgKOH/g bis 37 mgKOH/g beträgt und eine Schmelzviskosität von 2.000 mPa·s bis 7.000 mPa·s bei 200 °C erreicht ist, Beenden des Vakuumierens, Hinzugeben von Antioxidationsmittel, gleichmäßiges Rühren und Dispergieren und Entleeren.

11. Pulverbeschichtung, umfassend die Polyesterharzzusammensetzung nach einem der Ansprüche 1 bis 10, wobei die Pulverbeschichtung aus einer Pulverbeschichtung I und einer Pulverbeschichtung II nach einem Massenverhältnis von (0,5-2):1 zusammengesetzt ist, eine Härtungstemperatur der Pulverbeschichtung 140°C bis 160°C beträgt und die Härtungszeit der Pulverbeschichtung 10 Minuten bis 30 Minuten beträgt; Rohstoffinhaltsstoffe der Pulverbeschichtung I das Carboxyl-terminierte Polyesterharz mit hohem Säurewert, einen Härter, ein Pigment, einen Füllstoff und ein Additiv umfassen, und Rohstoffinhaltsstoffe der Pulverbeschichtung II das Carboxyl-terminierte Polyesterharz mit niedrigem Säurewert, einen Härter, ein Pigment, einen Füllstoff und ein Additiv umfassen.

12. Pulverbeschichtung nach Anspruch 11, wobei in den Rohstoffinhaltsstoffen der Pulverbeschichtung I und den Rohstoffinhaltsstoffen der Pulverbeschichtung II der Härter eine Verbindung mit mindestens zwei β-Hydroxyalkylamidgruppen umfasst.

13. Werkstück, wobei eine durch die Pulverbeschichtung nach Anspruch 12 gebildete Beschichtung an einer Oberfläche des Werkstücks angebracht ist.

## Revendications

1. Composition de résine de polyester, comprenant une résine de polyester à terminaison carboxyle à haute valeur acide et une résine de polyester à terminaison carboxyle à faible valeur acide, dans laquelle :
la résine polyester à terminaison carboxyle à haute valeur acide a une valeur acide de 75 mgKOH/g à 90 mgKOH/g, une viscosité à l'état fondu de 2 000 mPa•s à 6 000 mPa•s à 200°C et une température de transition vitreuse de 55°C à 62°C ; et la résine polyester à terminaison carboxyle à haute valeur acide est préparée à partir des matières premières suivantes en pourcentage en masse : 26 % à 46 % de polyol, 0,2 % à 6 % d'agent de ramification, 45 % à 70 % de polyacide, 0,1 % à 3 % de composé benzophénone partiellement carboxylé, 5 % à 18 % d'agent d'acidolyse, 0,05 % à 0,25 % de catalyseur d'estérification, 0,06 % à 0,3 % de stabilisant thermique et 0,2 % à 1,2 % d'antioxydant ;
la résine polyester à terminaison carboxyle à faible valeur acide a une valeur acide de 30 mgKOH/g à 37 mgKOH/g, une viscosité à l'état fondu de 2 000 mPa•s à 7 000 mPa•s à 200°C et une température de transition vitreuse de 51°C à 60°C ; et la résine polyester à terminaison carboxyle à faible valeur acide est préparée à partir des matières premières suivantes en pourcentage en masse : 34 % à 57 % de polyol, 0,1 % à 2 % d'agent de ramification, 43 % à 65 % de polyacide, 0,1 % à 3 % de composé benzophénone partiellement carboxylé, 2 % à 10 % d'agent d'acidolyse, 0,05 % à 0,25 % de catalyseur d'estérification, 0,06 % à 0,3 % de stabilisant thermique et 0,2 % à 1,2 % d'antioxydant ;
la valeur acide est testée selon GB/T 6743-2008 ; la viscosité à l'état fondu est testée selon GB/T9751.1-2008 ; et la température de transition vitreuse est testée selon GB/T 19466.2-2004 ; et
le composé de benzophénone partiellement carboxylé est préparé par un procédé de préparation comprenant les étapes suivantes consistant à : ajouter de la 2,2',4,4' -tétrahydroxybenzophénone et un solvant mélangé de N,N-diméthylformamide et de tétrahydrofurane dans une bouilloire de réaction sous protection de gaz protecteur, maintenir une température de réaction de 20°C à 25°C, ajouter lentement de l'hydrure de sodium, puis ajouter une solution de tétrahydrofurane d'anhydride pyromellitique lorsqu'il n'y a pas de bulles générées, réagir à 20°C à 25°C pendant 3 heures à 8 heures, ajuster une valeur de pH à 4 à 5, extraire, laver à l'eau et sécher pour obtenir le composé de benzophénone partiellement carboxylé.

2. Composition de résine de polyester selon la revendication 1, dans laquelle un rapport molaire de la 2,2',4,4'-tétrahydroxybenzophénone, de l'anhydride pyromellitique et de l'hydrure de sodium est de 1:2:2.

3. Composition de résine polyester selon la revendication 1, dans laquelle, dans les matières premières de la résine polyester à terminaison carboxyle à valeur acide élevée, le polyacide est au moins un élément choisi dans le groupe constitué par l'acide isophtalique, l'acide téréphtalique, l'acide phtalique, l'acide adipique et l'acide succinique, et une teneur en acide isophtalique n'est pas inférieure à 15 % en moles d'une teneur en polyacide ; et dans les matières premières de la résine de polyester à terminaison carboxyle à faible valeur acide, le polyacide est au moins deux éléments choisis dans le groupe constitué par l'acide isophtalique, l'acide dimère hydrogéné, l'acide téréphtalique, l'acide phtalique, l'acide adipique et l'acide succinique, une teneur en acide isophtalique n'est pas inférieure à 10 % en moles de la teneur en polyacide, et une teneur en acide dimère hydrogéné n'est pas inférieure à 6 % en poids de la teneur en polyacide.

4. Composition de résine polyester selon la revendication 3, dans laquelle, dans les matières premières de la résine polyester à terminaison carboxyle à haute valeur acide, le polyol est au moins un élément choisi dans le groupe constitué par le néopentyl glycol, l'éthanediol, le butanediol, le 1,3-propanediol, le 2-méthyl-1,3-propanediol, le diglycol et le 1,4-cyclohexanediméthanol, et une teneur en néopentyl glycol n'est pas inférieure à 65 % en moles d'une teneur en polyol ; et
dans les matières premières de la résine polyester à terminaison carboxyle de faible valeur acide, le polyol est au moins deux choisi dans le groupe constitué par le néopentyl glycol, le bisphénol A hydrogéné, l'éthanediol, le butanediol, le 1,3-propanediol, le 2-méthyl-1,3-propanediol, le diglycol et le 1,4-cyclohexanediméthanol, une teneur en néopentyl glycol n'est pas inférieure à 69 % en moles de la teneur en polyol, et une teneur en bisphénol A hydrogéné est de 3,5 % en poids à 30 % en poids sur la base de la teneur en polyol.

5. Composition de résine polyester selon la revendication 1, dans laquelle, dans les matières premières de la résine polyester à terminaison carboxyle à haute valeur acide, l'agent de ramification est au moins un agent choisi dans le groupe constitué par le triméthylolpropane, le trihydroxyéthylpropane et le pentaérythritol ; et
dans les matières premières de la résine polyester à terminaison carboxyle de faible valeur acide, l'agent de ramification est au moins un agent choisi dans le groupe constitué par le triméthylolpropane et le trihydroxyéthylpropane.

6. Composition de résine polyester selon la revendication 1, dans laquelle, dans les matières premières de la résine polyester à terminaison carboxyle à haute valeur acide, l'agent d'acidolyse est au moins un agent choisi dans le groupe constitué par l'acide isophtalique, l'anhydride trimellitique et l'anhydride pyromellitique, et une teneur en anhydride pyromellitique n'est pas inférieure à 20 % en moles d'une teneur en agent d'acidolyse ; et
dans les matières premières de la résine polyester à terminaison carboxyle de faible valeur acide, l'agent d'acidolyse est au moins un agent choisi dans le groupe constitué par l'acide isophtalique, l'anhydride trimellitique et l'anhydride pyromellitique, et une teneur en anhydride pyromellitique n'est pas inférieure à 7 % en moles de la teneur en agent d'acidolyse.

7. Composition de résine polyester selon la revendication 1, dans laquelle, dans les matières premières de la résine polyester à terminaison carboxyle à haute valeur acide et les matières premières de la résine polyester à terminaison carboxyle à faible valeur acide, le catalyseur d'estérification est au moins un catalyseur choisi dans le groupe constitué par l'oxyde de monobutylétain, le tris(2-éthylhexanoate) de butylétain et l'oxalate stanneux ; le stabilisant thermique est choisi parmi le phosphite de triphényle ; et l'antioxydant est au moins un antioxydant choisi dans le groupe constitué par un antioxydant phénolique encombré et un antioxydant phosphite.

8. Composition de résine de polyester selon l'une quelconque des revendications 1 à 7, dans laquelle la résine de polyester à terminaison carboxyle à haute valeur acide est préparée par un procédé de préparation comprenant les étapes suivantes : ajouter le polyol, l'agent de ramification, le stabilisant thermique et le catalyseur d'estérification dans un récipient de réaction, chauffer à 160°C à 180°C sous la protection d'un gaz protecteur, ajouter le polyacide, introduire le gaz protecteur, chauffer en continu pour réagir, chauffer progressivement à 245°C à 250°C et réagir jusqu'à un matériau réactionnel devient clair et a une valeur acide de 10 mgKOH/g à 20 mgKOH/g ; puis refroidir à 235°C à 240°C, ajouter l'agent d'acidolyse et le composé benzophénone partiellement carboxylé, réagir jusqu'à ce que le matériau réactionnel ait une valeur acide de 90 mgKOH/g à 100 mgKOH/g, soumettre à une réaction de polycondensation sous vide jusqu'à ce que la valeur acide soit de 75 mgKOH/g à 90 mgKOH/g et une viscosité à l'état fondu de 2 000 mPa.s à 6 000 mPa.s à 200°C, arrêter la mise sous vide, ajouter l'antioxydant, remuer et disperser uniformément, puis décharger.

9. Composition de résine de polyester selon l'une quelconque des revendications 1 à 7, dans laquelle la résine de polyester à terminaison carboxyle à faible valeur acide est préparée par un procédé de préparation comprenant les étapes suivantes : ajouter le polyol, l'agent de ramification, le stabilisant thermique et le catalyseur d'estérification dans un récipient de réaction, chauffer à 160°C à 180°C sous la protection d'un gaz protecteur, ajouter le polyacide, introduire le gaz protecteur, chauffer en continu pour réagir, chauffer progressivement à 245°C à 250°C et réagir jusqu'à un matériau réactionnel devient clair et a une valeur acide de 9 mgKOH/g à 20 mgKOH/g ; refroidir à 235°C à 240°C, ajouter l'agent d'acidolyse et le composé benzophénone partiellement carboxylé, réagir jusqu'à ce que le matériau réactionnel ait une valeur acide de 42 mgKOH/g à 48 mgKOH/g, soumettre à une réaction de polycondensation sous vide jusqu'à ce que la valeur acide soit de 30 mgKOH/g à 37 mgKOH/g et une viscosité à l'état fondu de 2 000 mPa.s à 7 000 mPa.s à 200°C, arrêter la mise sous vide, ajouter un antioxydant, remuer et disperser uniformément et décharger.

10. Composition de résine de polyester selon la revendication 9, dans laquelle, dans les matières premières de la résine de polyester à terminaison carboxyle de faible valeur acide, le polyacide comprend l'acide isophtalique et l'acide dimère hydrogéné ; le polyol comprend le néopentylglycol et le bisphénol A hydrogéné ; et la résine de polyester à terminaison carboxyle de faible valeur acide est préparée par un procédé de préparation comprenant les étapes suivantes consistant à : ajouter d'autres polyols à l'exception du bisphénol A hydrogéné, de l'agent de ramification, du stabilisant thermique et du catalyseur d'estérification dans un récipient de réaction, chauffer à 160°C à 180°C sous protection de gaz protecteur, ajouter le polyacide, introduire le gaz protecteur, chauffer en continu pour réagir, chauffer progressivement à 245°C à 250°C, et réagir jusqu'à ce qu'un matériau réactionnel soit clair et ait une valeur acide de 9 mgKOH/g à 20 mgKOH/g ; ajouter le bisphénol A hydrogéné, maintenir une température de 245°C à 250°C, et réagir jusqu'à ce que le matériau réactionnel devienne clair et ait une valeur acide de 5 mgKOH/g à 15 mgKOH/g ; refroidir à 235°C à 240°C, ajouter l'agent d'acidolyse et le composé benzophénone partiellement carboxylé, réagir jusqu'à ce que le matériau réactionnel ait une valeur acide de 42 mgKOH/g à 48 mgKOH/g, soumettre à une réaction de polycondensation sous vide jusqu'à ce que la valeur acide soit de 30 mgKOH/g à 37 mgKOH/g et une viscosité à l'état fondu de 2 000 mPa·s à 7 000 mPa·s à 200°C, arrêter la mise sous vide, ajouter un antioxydant, agiter et disperser uniformément, et décharger.

11. Revêtement en poudre, comprenant la composition de résine polyester selon l'une quelconque des revendications 1 à 10, dans lequel le revêtement en poudre est composé d'un revêtement en poudre I et d'un revêtement en poudre II selon un rapport en masse de (0,5-2) :1, une température de durcissement du revêtement en poudre est de 140°C à 160°C, et le temps de durcissement du revêtement en poudre est de 10 minutes à 30 minutes ; les ingrédients de matière première du revêtement en poudre I comprennent la résine polyester à terminaison carboxyle à haute valeur acide, un agent de durcissement, un pigment, une charge et un additif, et les ingrédients de matière première du revêtement en poudre II comprennent la résine polyester à terminaison carboxyle à faible valeur acide, un agent de durcissement, un pigment, une charge et un additif.

12. Revêtement en poudre selon la revendication 11, dans lequel dans les ingrédients de matière première du revêtement en poudre I et les ingrédients de matière première du revêtement en poudre II, l'agent de durcissement comprend un composé avec au moins deux groupes β-hydroxyalkylamide.

13. Pièce à usiner, dans laquelle un revêtement formé par le revêtement en poudre selon la revendication 12 est fixé à une surface de la pièce à usiner.
